# EUROPEAN PATENT APPLICATION

(11) **EP 4 711 647 A1**
(43) Date of publication of application: **18.03.2026**
(21) Application number: 24200137.8
(22) Date of filing: 13.09.2024
(51) Int. Cl.: F16J 9/06, F16J 9/14, F16J 9/20, F04B 39/00, F04B 39/04

(54) **TUMBLE PISTON RING, TUMBLE PISTON AND RECIPROCATING MACHINE**

(71) Applicant: KB Intellectual Property GmbH & Co. KG, 82049 Pullach (DE)
(72) Inventor: HEBRARD, Gilles, 80809 München (DE)

(57) **Abstract**

The invention relates to a tumble piston ring, a tumble piston comprising the tumble piston ring and a reciprocating machine comprising the tumble piston, and relates in particular to a tumble piston ring, a tumble piston and a reciprocating machine wherein the tumble piston ring conforms to the variable cylinder cross section caused by the tumbling motion. Disclosed i.a. is a tumble piston ring (7) that is configured to be used as a piston ring in a tumble piston (4) of a reciprocating machine (1), the tumble piston ring (7) comprising: an inner surface (72) that is an inner circumferential face of the tumble piston ring (7), the inner surface (72) facing towards the radial center of the tumble piston ring (7), a contact surface (73) that is an outer circumferential face of the tumble piston ring (7), the contact surface (73) facing away from the radial center of the tumble piston ring (7), comprising a convex shape in an axial direction perpendicular to a circumferential direction and a radial direction of the tumble piston ring (7), and being configured to maintain sealing with a cylinder liner (3), a first side surface (74) that is a face of the tumble piston ring (7) facing in an axial direction of the tumble piston ring (7), a second side surface (75) that is a face of the tumble piston ring (7) opposite of the first side surface (74), wherein the tumble piston ring (7) has a cross section perpendicular to a tangential direction that is substantially square.

## Description

The invention relates to a tumble piston ring, a tumble piston comprising the tumble piston ring and a reciprocating machine comprising the tumble piston, and relates in particular to a tumble piston ring, a tumble piston and a reciprocating machine wherein the tumble piston ring conforms to the variable cylinder cross section caused by the tumbling motion.

In the related art, reciprocating machines like reciprocating engines or reciprocating compressors are known that employ at least one piston reciprocating within a cylinder in a manner that a chamber at a front side of the piston is sealed off against a chamber at a rear side of the piston to prevent pressure equalization.

In linear piston reciprocating machines, the piston is rotationally decoupled from a crank shaft via a connection rod that is rotationally supported at the piston. This allows the piston to maintain its alignment with the cylinder.

In tumble piston reciprocating machines, however, this rotational decoupling from a crank shaft is omitted and the piston is connected to the crank shaft in a manner in that the piston is rotationally bound to the position of the crank shaft's connection rod pin and thus to the orientation of the crank shaft. Consequently, the piston's alignment within the cylinder changes within a revolution, generally from an arrangement in that the piston's center line maximally positively deviates from the cylinder's center line (maximum positive tumble tilting angle), via an arrangement in that the piston's center line aligns with the cylinder's center line, to an arrangement in that the piston's center line maximally negatively deviates from the cylinder's center line (maximum negative tumble tilting angle). In accordance with that, the cylindric section of the cylinder with the piston's main plane, i.e. a plane that is perpendicular to the piston's center line, deviates from a circular shape towards an elliptic shape the more the piston's center line deviates from the cylinder's center line. Concerning the reciprocating machine's ability to seal off the chamber at the piston's front side against the chamber at the piston's rear side, this increasing of the dimensions of the cylindric section perpendicular to the rotational axis needs to be taken into account.

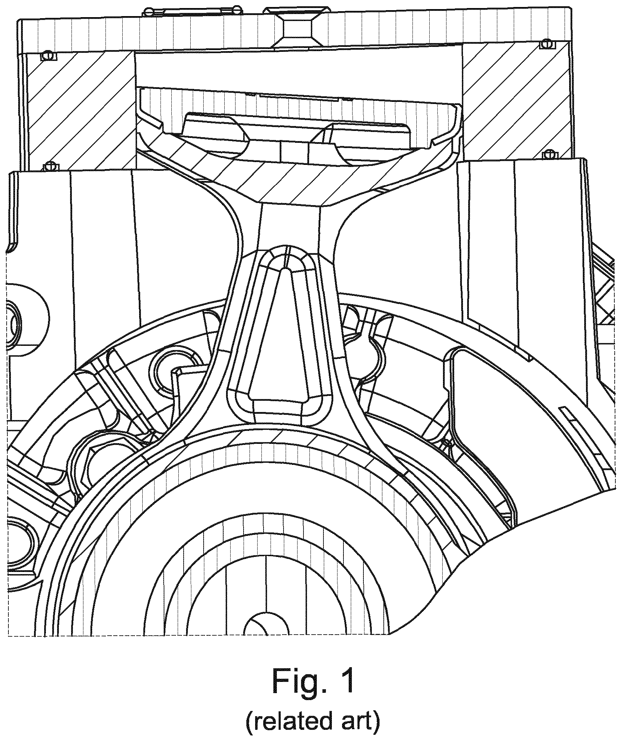

In conventional tumble piston reciprocating machines, e.g. as shown in **Fig.** 1, tumble pistons often utilize V-shaped piston rings made of Teflon or similar materials. These piston rings are known for their unique ability to seamlessly adapt from a circular to an elliptical shape in response to the operational dynamics of the piston. The fundamental geometry of these rings allows for a high degree of flexibility, facilitating effective sealing and reduced friction between the piston and the cylinder wall.

Document DE 10 2012 019 618 A1 discloses a method for producing a piston having a central longitudinal piston axis and a piston circumference with a circumferential seal in the form of a circular cup sleeve, the cup sleeve, in its shape that has the functional contour of the installed state, consists of a leg hold in the piston and aligned in a radial region radially to the piston's longitudinal axis, and a leg bent in an axial region by approximately 90 °, aligned approximately parallel to the piston's longitudinal axis. In order to reduce manufacturing steps and to achieve a precise fit of the piston into a cylinder of a reciprocating piston working machine, it is provided that the cup sleeve as a flat or curved massive ring is mounted to the piston with a radial region, which forms the approximately radial leg of the cup sleeve aligned with the piston's longitudinal axis, and then a peripheral region that radially exceeds the piston's circumference, is deformed into the axial region of the cup sleeve, which is bent by approximately 90°, in order to achieve the functional contour of the installed state of the cup sleeve.

The material choice of Teflon is typically preferred due to its low friction coefficient, resistance to corrosive substances, and ability to withstand varying operational temperatures. However, despite these benefits, V-shaped piston rings exhibit a notable drawback: their material thickness is relatively low. This characteristic inherently limits the wear reserve of the piston ring, making it less suitable for applications in particular in the area of commercial vehicles, where longevity and durability under high stress and wear conditions are critical.

In light of these challenges, there is a recognized need within the field to innovate beyond the current limitations of V-shaped Teflon piston rings. Specifically, the thrust of recent developments aims to enhance the wear reserve without compromising the adaptability and sealing effectiveness essential for optimal piston operation.

It is the object of the invention to overcome the shortcomings of the related art and in particular to provide a tumble piston ring, a tumble piston and a reciprocating machine with an improved durability of the tumble piston ring.

This object is solved by the subject-matter of the independent claims. Further developments are subject-matter of the dependent claims.

Disclosed is a tumble piston ring that is configured to be used as a piston ring in a tumble piston of a reciprocating machine, the tumble piston ring comprising: an inner surface that is an inner circumferential face of the tumble piston ring, the inner surface facing towards the radial center of the tumble piston ring, a contact surface that is an outer circumferential face of the tumble piston ring, the contact surface facing away from the radial center of the tumble piston ring, comprising a convex shape in an axial direction perpendicular to a circumferential direction and a radial direction of the tumble piston ring, and being configured to maintain sealing with a cylinder liner, a first side surface that is a face of the tumble piston ring facing in an axial direction of the tumble piston ring, a second side surface that is a face of the tumble piston ring opposite of the first side surface, wherein the tumble piston ring has a cross section perpendicular to a tangential direction that is substantially square. The sides of the square are formed by the inner surface, the contact surface, the first side surface and the second side surface.

It is advantageous when in the substantially square cross section, the distance between the first side surface and the second surface is larger than half the distance between the inner surface and the contact surface.

It is advantageous when the convex shape of the contact surface is barrel-shaped to conform to the maximum tilting angle of the tumble piston.

It is advantageous when the convex shape of the contact surface is a circle segment spanning an angle that is equal to or larger than the sum of a maximum positive tilting angle and a maximum negative tilting angle of the tumble piston.

It is advantageous when the tumble piston ring is of a cut type piston ring and further comprises: a first end section at one side of the cut, a second end section at another side of the cut, wherein the first end section and the second end section overlap.

It is advantageous when the first end section and the second end section are reduced in a thickness in an axial direction such that the sum of the thicknesses in an axial direction of the first end section and the second end section amount to a general thickness of the piston ring in an axial direction.

It is advantageous when the piston ring is biased in a manner that it exerts an expansion force in a radial direction.

It is advantageous when the piston ring comprises a spring element that exerts the expansion force in the radial direction.

It is advantageous when the inner surface comprises a spring groove as a concave groove along a circumferential direction, and the spring element is a preload coil spring fitting in the spring groove.

It is advantageous when the spring element is a garter spring positioned within the spring groove, the garter spring being adapted to expand and contract in response to the movement of the tumble piston ring, thereby accommodating variations in the diameter of the tumble piston ring due to the tumbling motion of the tumble piston.

It is advantageous when the tumble piston ring is made from Polytetrafluoroethylene.

Disclosed is a tumble piston that is configured to be used in a cylinder of a reciprocating machine, the tumble piston comprising: a tumble piston ring according to one of the preceding aspects for a tumble piston ring, and a tumble piston ring groove as a groove along a peripheral circumferential surface of the tumble piston, wherein the tumble piston ring groove has a width in an axial direction that corresponds to the width in an axial direction of the tumble piston ring, and the tumble piston ring is arranged in the tumble piston ring groove such as to expand and contract in a radial direction in accordance with a tumbling motion of the tumble piston.

It is advantageous when the tumble piston comprises a maximum positive tumble tilting angle and a maximum negative tumble tilting angle and the circle segment spans over an angle that is equal to or larger than the sum of the maximum positive tumble tilting angle and the maximum negative tumble tilting angle.

It is advantageous when the tumble piston ring groove has a depth that exceeds half of a difference of the expansion of the cylinder's cross section at a maximum positive tumble tilting angle or a maximum negative tumble tilting angle and the expansion of the cylinder's cross section at a minimum tumble tilting angle.

Disclosed is a tumble piston machine, comprising at least one cylinder and at least one tumble piston according to the preceding claims arranged within the cylinder.

It is advantageous when the tumble piston machine is a compressor.

It is advantageous when the tumble piston is arranged within a cylinder of the tumble piston machine in a manner that the tumble piston ring is arranged in the tumble piston ring groove such as to expand and contract in a radial direction in accordance with the tumbling motion of the tumble piston such that the contact surface remains in contact with a liner of the cylinder over the complete contact surface.

It is advantageous when the tumble piston ring groove has a depth that exceeds half of a difference of the expansion of the cylinder's cross section at a maximum positive tumble tilting angle or a maximum negative tumble tilting angle and the expansion of the cylinder's cross section at a minimum tumble tilting angle.

Further details and advantages of the invention will be explained in the following detailed description of an embodiment of the invention in combination with the attached Figures.
**Fig. 1** exhibits an example of a tumble piston reciprocating compressor of the related art.

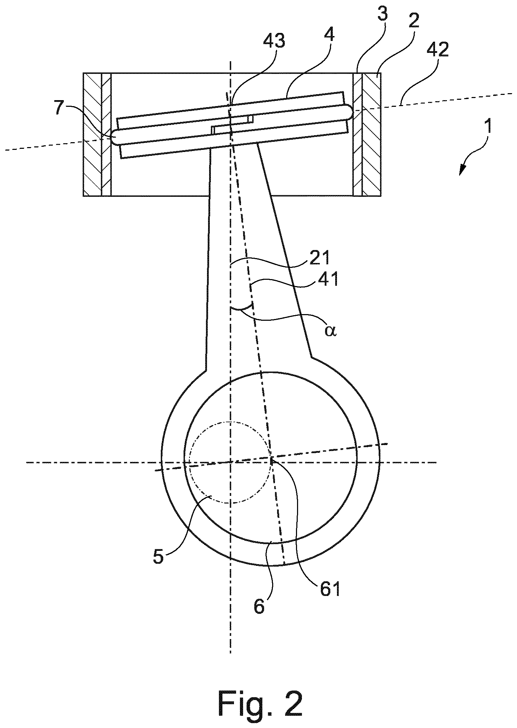

**Fig. 2** exhibits a schematic view of a reciprocating machine according to an embodiment.
**Fig. 3** exhibits a tumble piston ring according to the embodiment.
**Fig. 4** exhibits a cross sectional view of the tumble piston ring.
**Fig. 5** exhibits a side view of the tumble piston ring and a tumble piston.
**Fig. 6** exhibits a cross sectional view of the tumble piston.
**Fig. 7** exhibits a cross sectional view of the tumble piston ring.

An embodiment of a reciprocating machine is described in the following by means of **Fig. 1****.**

In the embodiment, a reciprocating machine 1 is a compressor. The reciprocating machine 1 comprises a cylinder 2. In cylinder 2 a cylinder liner 3 is inserted. Within the cylinder liner 3, a piston 4 is located. Piston 4 is configured to be a tumble piston. Piston 4 is connected to a crank shaft 5 in a manner in that the piston 4 is rotationally bound to the position of a crank shaft's 5 connection rod pin 6 and thus to the orientation of the crank shaft. Consequently, the piston's 4 alignment within the cylinder liner 3 changes within a revolution of the crank shaft 5, generally from an arrangement in that the piston's 4 center line 41 maximally positively deviates from the cylinder's 2 center line 21 by maximum positive tumble tilting angle α, via an arrangement in that the piston's center line 41 aligns with the cylinder's center line 21 by a minimum tumble tilting angle α, to an arrangement in that the piston's center line 41 maximally negatively deviates from the cylinder's center line 21 by a maximum negative tumble tilting angle α. In accordance with that, the cylindric section of the cylinder liner 3 with the piston's 4 main plane 42, i.e. a plane that is perpendicular to the piston's center line 41, deviates from a circular shape towards an elliptic shape the more the piston's center line 41 deviates from the cylinder's center line 21, i.e. the larger the tumble tilting angle α becomes. For example, with a cylinder stroke of 20mm, a tumble tilting angle α of 4.8° and a distance of 120mm between the connection rod pin center 61 and a piston center 43, a cylinder with a circular cross section having base diameter of 75mm stretches to an ellipse having a major axis of a length of 75.264mm. Thus, the expansion of the cylinder's cross section at a maximum tumble tilting angle differs from the expansion of the cylinder's cross section at a minimum tumble tilting angle by 0,264mm. The piston 4 is further provided with a piston ring 7 that is a tumble piston ring. The piston ring 7 serves for sealing a gap between the piston 4 and the cylinder liner 3.

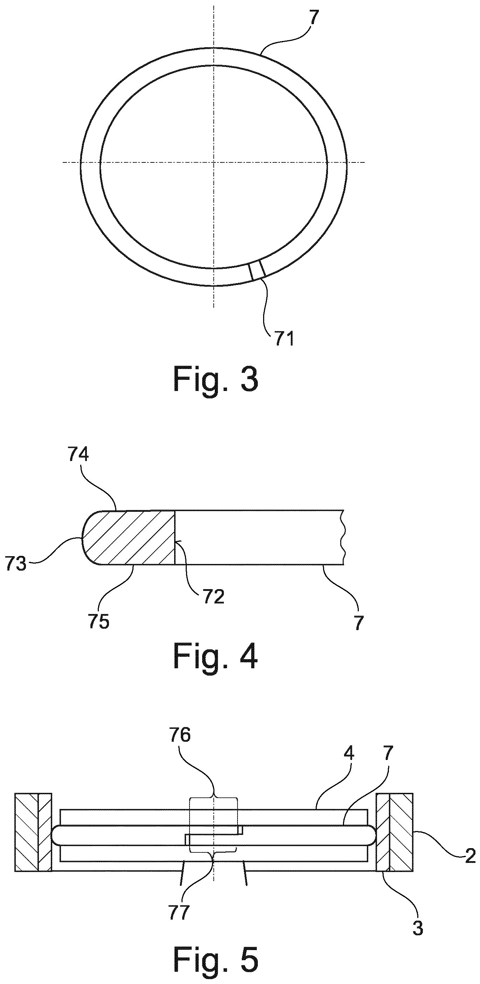

The piston ring 7 is described in the following by means of **Figs. 3, 4 and 5****.**

The piston ring 7 has an annular shape perpendicular to an axial direction. The piston ring 7 is of a cut type, i.e. it is not a closed annulus but comprises a radial gap 71.

The piston ring 7 comprises an inner surface 72 that is an inner circumferential face of the piston ring 7. The inner surface 72 faces towards the radial center of the piston ring 7. The piston ring further comprises a contact surface 73 that is an outer circumferential face of the piston ring 7. The contact surface 73 faces away from the radial center of the piston ring 7, comprises a convex shape in an axial direction perpendicular to a circumferential direction and a radial direction of the piston ring 7, and is configured to maintain sealing with the cylinder liner 3. The piston ring 7 further comprises a first side surface 74 that is a face of the piston ring 7 facing in an axial direction of the piston ring 7, and a second side surface 75 that is a face of the piston ring 7 opposite of the first side surface 74. The cross section perpendicular to a tangential direction of the piston ring 7, delimited by the inner surface 72, the contact surface 73, the first side surface 74 and the second side surface 75 has a substantially square shape. In particular, in the substantially square cross section, the distance between the first side surface 74 and the second side surface 75 is larger than half the distance between the inner surface 72 and the contact surface 73. Further in particular, the piston ring 7 according to the embodiment is substantially thicker than a V-shaped tumble piston ring used in the related art.

The piston ring 7 comprises a first end section 76 and a second end section 77, abutting the gap 71, respectively. The first end section 76 and the second end section 77 overlap in the axial direction of the piston ring 7. At the first end section 76 and the second end section 77, a thickness in an axial direction of the piston ring 7 is reduced by half, such that even at the overlapping portions of the first end section 76 and the second end section 77, the overall thickness of the piston ring is not increased. Due to the cut nature of the piston ring, the piston ring may expand in a radial direction without braking its sealing properties, since - when viewed from an axial direction - the piston ring remains a seemingly closed anulus even in an expanded state.

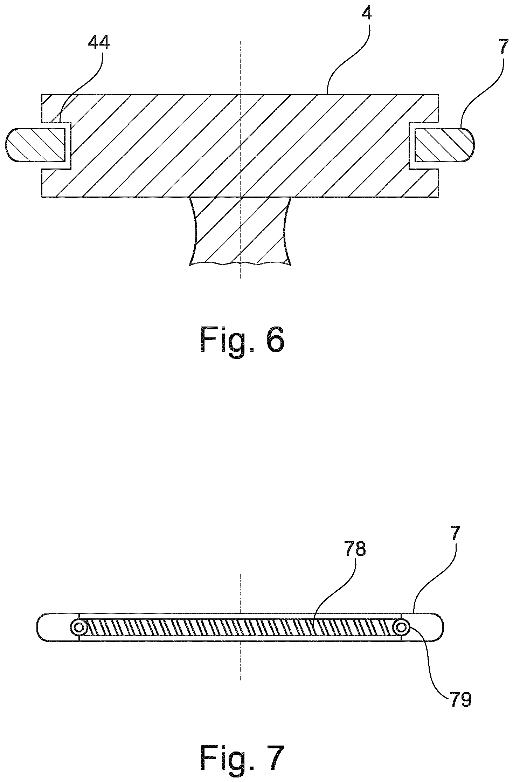

By means of **Fig. 6****,** the piston 4 is described in more detail.

The piston 4 is manufactured integrally in the embodiment. The piston 4 comprises a piston ring groove 44. The piston ring groove 4 is applied to the piston 4 by milling. The piston ring groove 44 comprises a width in an axial direction that basically corresponds to the width of the piston ring 7 in an axial direction such that the piston ring 7 can be received into the piston ring groove 44 in a manner allowing a radial sliding of the piston ring 7. The piston ring groove 44 has a depth that is larger than half of a difference of the expansion of the cylinder's cross section at a maximum positive tumble tilting angle or a maximum negative tumble tilting angle along the major axis of the ellipse and the expansion of the cylinder's cross section at a minimum tumble tilting angle. Thus, the piston ring 7 may remain within the piston ring groove 44 even at its maximum extension within the cylinder liner 3.

By means of **Fig. 7****,** the piston ring is described in more detail.

In the embodiment, the piston is made from Polytetrafluoroethylene.

The contact surface's 73 convex shape provides tight contact with the cylinder liner 3, even in a state in that the tumble tilting angle is larger than zero. To achieve that, the piston ring comprises a barrel shape. In particular, the contact surface's 73 convex shape is a circle segment spanning at least an angle that is equal to or larger than the sum of a maximum positive tilting angle and a maximum negative tilting angle of the tumble piston and thus provides a parallel arrangement of the contact line of the piston ring 7 and the inner liner 3.

The piston ring 7 is biased in a manner that it extends to a diameter that is larger than the major axis of the ellipse formed by a cut of the cylinder liner 3 with the piston's main plane 42 at the maximum tumble tilting angle. Thus, when inserted into the cylinder liner 3 while residing in the piston ring groove 44, the piston ring 7 urges towards the cylinder liner 3 such that a tight contact between the contact surface 73 and the cylinder liner 7 is maintained. This biasing force may be implemented by providing the piston ring with a corresponding geometry that is larger in a radial direction than the cylinder liner's 3 inner diameter and providing the piston ring 7 with a sufficient stiffness. However, in a modification, this biasing force is applied by a spring element 78. In the modification, a spring element 78 has the form of a coil spring, advantageously in form of a garter spring. The spring element 78 is arranged in a spring groove 79 that is a concave groove that runs in a circumferential direction on the inner surface 72 of the piston ring. The spring element 78 is configured to provide a force along a radially outward direction that urges the piston ring 7 towards the cylinder liner 3. By that biasing force, either applied by the piston ring 7 itself or by the spring element 78, not only changes in the expansion of the tilting cross section within the cylinder liner 3 can be compensated, but also wear of the piston ring 7 or the cylinder liner 3 can be compensated.

The invention was described by means of an embodiment. The embodiment is only of explanatory nature and does not restrict the invention as defined by the claims. As recognizable by the skilled person, deviations from the embodiment are possible without leaving the invention that is defined according to the scope of the claimed subject-matter.

For example, in the embodiment, a cylinder liner is inserted into the cylinder. The invention is also applicable without a cylinder liner when the piston reciprocates directly within the cylinder.

Different embodiments may be combined. In particular the modification and the embodiment may be combined such that the biasing force is provided together by the piston ring 7 and the spring element 78.

In this document, as far as an axis is described as having a specific orientation, e.g. like being parallel to an axis, this description encompasses any orientation of that axis within a 15° angle range of deviation in any direction from that worded orientation.

In this document, the terms "and", "or" and "either ... or" are used as conjunctions in a meaning similar to the logical conjunctions "AND", "OR" (often also "and/or") or "XOR", respectively. In particular, in contrast to "either ... or", the term "or" also includes occurrence of both operands.

Method steps indicated in the description or the claims only serve an enumerative purpose of the method steps. They only imply a given sequence or an order where their sequence or order is explicitly expressed or is - obvious for the skilled person - mandatory due to their nature. In particular, the listing of method steps do not imply that this listing is exhaustive. Also, not all method steps described in an embodiment are required to implement the invention. The required method steps are defined by the claims only.

In the claims, the word "comprising" does not imply a closed listing and does not exclude other elements or steps.

The indefinite article "a" or "an" does not exclude a plurality and has to be understood as "at least one".

Further, within the scope of the disclosure of this document, the following terms are understood with the indicated meaning:
**Commercial vehicle** in the sense of this document is any vehicle, either self-driven or towed, for transporting goods or freight. These are in particular HGV, trucks, tractor units or trailers.
**Axial direction** with respect to a rotated or basically rotationally symmetric object is a direction that is in parallel with the rotation axis or symmetry axis.
**Radial direction** with respect to a rotated or basically rotationally symmetric object is a direction that faces away rectangularly from the rotation axis or symmetry axis.
**Circumferential direction/tangential direction** with respect to a rotated or basically rotationally symmetric object is a direction that faces - starting from a location at the object's circumference - in a direction perpendicular to the axial direction and the radial direction towards this location, respectively.
**Maximum positive tumble tilting angle** is the angle between a tumble piston's center line and a cylinder's centerline in that the tumble piston reciprocates, when the deviation of the tumble piston's centerline maximally deviates from the cylinder's center line in one direction (positive direction).
**Maximum negative tumble tilting angle** is the angle between a tumble piston's center line and a cylinder's centerline in that the tumble piston reciprocates, when the deviation of the tumble piston's centerline maximally deviates from the cylinder's center line in a direction opposite to the one direction (negative direction).
**Minimum tumble tilting angle** is the angle between a tumble piston's center line and a cylinder's centerline in that the tumble piston reciprocates, when tumble piston's centerline is conformal to the cylinder's center line.

### LIST OF REFERENCE SIGNS

- 1: reciprocating machine
- 2: cylinder
- 3: cylinder liner
- 4: piston/tumble piston
- 41: piston center line
- 42: piston main plane
- 43: piston center
- 44: piston ring groove
- 5: crank shaft
- 6: crank shaft pin
- 61: crank shaft pin center
- 7: piston ring/tumble piston ring
- 71: radial gap
- 72: inner surface of the piston ring
- 73: contact surface of the piston ring
- 74: first side surface of the piston ring
- 75: second side surface of the piston ring
- 76: first end section
- 77: second end section
- 78: spring element
- 79: spring groove

## Claims

1. A tumble piston ring (7) that is configured to be used as a piston ring in a tumble piston (4) of a reciprocating machine (1), the tumble piston ring (7) comprising:
an inner surface (72) that is an inner circumferential face of the tumble piston ring (7), the inner surface (72) facing towards the radial center of the tumble piston ring (7),
a contact surface (73) that is an outer circumferential face of the tumble piston ring (7), the contact surface (73)
facing away from the radial center of the tumble piston ring (7),
comprising a convex shape in an axial direction perpendicular to a circumferential direction and a radial direction of the tumble piston ring (7), and
being configured to maintain sealing with a cylinder (2, 3),
a first side surface (74) that is a face of the tumble piston ring (7) facing in an axial direction of the tumble piston ring (7),
a second side surface (75) that is a face of the tumble piston ring (7) opposite of the first side surface,
wherein
the tumble piston ring (7) has a cross section perpendicular to a tangential direction that is substantially square with the inner surface (72), the contact surface (73), the first side surface and the second side surface (75) as sides.

2. The tumble piston ring (7) according to the preceding claim, wherein in the substantially square cross section, the distance between the first side surface (74) and the second side surface (75) is larger than half the distance between the inner surface (72) and the contact surface.

3. The tumble piston ring (7) according to any one of the preceding claims, wherein the convex shape of the contact surface (73) is barrel-shaped to conform to the maximum tumble tilting angle (α) of the tumble piston (4).

4. The tumble piston ring (7) according to any one of the preceding claims, wherein the convex shape of the contact surface (73) is a circle segment spanning at least an angle that is equal to or larger than the sum of a maximum positive tilting angle (α) and a maximum negative tilting angle (α) of the tumble piston (4).

5. The tumble piston ring (7) according to any one of the preceding claims, wherein the tumble piston ring (7) is of a cut type piston ring and further comprises:
a first end section (76) at one side of the cut,
a second end section (77) at another side of the cut,
wherein the first end section (76) and the second end section (77) overlap, preferably wherein the first end section (76) and the second end section (77) are reduced in a thickness in an axial direction such that the sum of the thicknesses in an axial direction of the first end section (76) and the second end section amount to a general thickness of the piston ring in an axial direction.

6. The tumble piston ring (7) according to any of the preceding claims, wherein the piston ring is biased in a manner that it exerts an expansion force in a radial direction.

7. The tumble piston ring (7) according to the preceding claim, wherein the piston ring comprises a spring element (78) that exerts the expansion force in the radial direction.

8. The tumble piston ring (7) according to the preceding claim, wherein the inner surface (72) comprises a spring groove (79) as a concave groove along a circumferential direction, and the spring element (78) is a preloaded coil spring fitting in the spring groove (79),
preferably wherein the spring element (78) is a garter spring positioned within the spring groove (79), the garter spring being adapted to expand and contract in response to the movement of the tumble piston ring (7), thereby accommodating variations in the diameter of the tumble piston ring (7) due to the tumbling motion of the tumble piston (4).

9. The tumble piston ring (7) according to the preceding claims, wherein the tumble piston ring (7) is made from Polytetrafluoroethylene.

10. A tumble piston (4) that is configured to be used in a cylinder (2, 3) of a reciprocating machine (1), the tumble piston (4) comprising:
a tumble piston ring (7) according to any one of the preceding claims for a tumble piston ring (7), and
a tumble piston ring groove as a concave groove along a peripheral circumferential surface of the tumble piston (4),
wherein
the tumble piston ring groove has a width in an axial direction that corresponds to the width in an axial direction of the tumble piston ring (7), and
the tumble piston ring (7) is arranged in the tumble piston ring groove such as to expand and contract in a radial direction in accordance with a tumbling motion of the tumble piston (4).

11. The tumble piston (4) according to the preceding claim when referring to claim 4, wherein the tumble piston (4) comprises a maximum positive tumble tilting angle (α) and a maximum negative tumble tilting angle (α) and the circle segment spans over an angle that is equal to or larger than the sum of the maximum positive tumble tilting angle (α) and the maximum negative tumble tilting angle (α).

12. The tumble piston (4) according to the preceding claims, wherein the tumble piston ring groove has a depth that exceeds half of a difference of the expansion of the cylinder's cross section at a maximum positive tumble tilting angle (α) or a maximum negative tumble tilting angle (α) and the expansion of the cylinder's cross section at a minimum tumble tilting angle (α).

13. A tumble piston machine (1), comprising at least one cylinder (2, 3) and at least one tumble piston (4) according to the any of the preceding claims arranged within the cylinder (2, 3).

14. The tumble piston machine (1) according to any of the previous claims, wherein the tumble piston (4) is arranged within a cylinder (2, 3) of the tumble piston machine (1) in a manner that the tumble piston ring (7) is arranged in the tumble piston ring groove such as to expand and contract in a radial direction in accordance with the tumbling motion of the tumble piston (4) such that the contact surface (73) remains in contact with the cylinder (2, 3) over the complete contact surface.

15. The tumble piston machine according to claim 12 or 13, wherein the tumble piston ring groove has a depth that exceeds half of a difference of
the expansion of the cylinder's cross section at a maximum positive tumble tilting angle or a maximum negative tumble tilting angle, and
the expansion of the cylinder's cross section at a minimum tumble tilting angle.
